Europäisches Patentamt

European Patent Office

Office européen des brevets

(11) Publication number: **0 214 938 B1**

# EUROPEAN PATENT SPECIFICATION

(45) Date of publication of patent specification: **08.07.92**   (51) Int. Cl.⁵: **G05D 23/02**, F01P 7/16

(21) Application number: **86830220.9**

(22) Date of filing: **25.07.86**

(54) **A deblocking arrangement of a damaged thermostat.**

(30) Priority: **26.07.85 ES 547027**

(43) Date of publication of application:
**18.03.87 Bulletin 87/12**

(45) Publication of the grant of the patent:
**08.07.92 Bulletin 92/28**

(84) Designated Contracting States:
**AT BE CH DE FR GB IT LI LU NL SE**

(56) References cited:
**US-A- 3 120 926**

**PATENT ABSTRACTS OF JAPAN, vol. 10, no.
151 (M-483)[2208], 31st May 1986 & JP-A-61
004816 (SANSHIN KOGYO K.K.) 10-01-1986**

(73) Proprietor: **Gonzalez Perez, Alberto José
San Ignacio, 5
Montcada I Reixac (Barcelona)(ES)**

(72) Inventor: **Gonzalez Perez, Alberto José
San Ignacio, 5
Montcada I Reixac (Barcelona)(ES)**

(74) Representative: **Righetti, Giuseppe
Bugnion S.p.A. Via Carlo Farini, 81
I-20159 Milano(IT)**

EP 0 214 938 B1

## Description

The present invention patent refers to an arrangement designed for deblocking the flow of a cooling fluid in a cooling circuit associated to a thermal engine wherein a thermostat is located, when the thermostat is not operating and the fluid flow is somehow prevented therefrom. Such as is the case for example of the water circuit going to and after coming from the car radiator,when the circuit associated thermostat is not in operation for instance because a failure is caused by a malfunction of its movable parts.

As is known, the failure of a thermostat attached to a cooling circuit of a car engine might cause significant damages in the circuit itself and in other parts of the engine and originating additionally a lot of practical annoyances, loss of time and replacement of several components.

It is known from U.S. patent No. 3,120,926 a control arrangement for a cooling water circulatory system, comprising a thermostat valve which controls the flow of the cooling water coming from an engine through a duct.

The water flow is sent either to a radiator, through a second duct or directly back to the engine through a third duct.

A control valve is provided on a by-pass line connected with the first aid third ducts and by-passing the thermostat valve to connect the first duct with the second duct.

The control valve is manually operable in case of operativeness of the thermostat, to selective control the flow of the cooling water either to the radiator or back to the engine.

This kind of control arrangement is however subjected to some drawbacks due to its complex structure which provides a deblocking device, formed by a slide valve, disengaged from the thermostat.

Since the failure of the thermostat occurs generally owing to the deposits and incrustations of cooling water residues, the control arrangement of U.S. patent No. 3,120,926 cannot move alternately the thermostat so that this latter cannot be reinstated in its original functioning.

The above drawbacks are overcome, according to the present invention by a deblocking arrangement of a damaged thermostat, designed to be inserted in a cooling circuit of a thermal engine for a vehicle, comprising a stud guided in a cylindrical support and cooperating with a thermostat body, which is moved through an opening that communicates with a cooling circuit and selects a water flow towards the cooling circuit itself, characterized in that the stud has an end directly connected to the thermostat body and is movable from a position in which the thermostat body closes said opening to a position in which the thermostat body opens said opening , whereby when the thermostat body exhibits a defective operation which causes a cut off of said flow, this flow is set off again by the stud direct action on the thermostat body.

The deblocking arrangement of a damaged thermostat being the object of this patent allows to set off again the flow of the cooling fluid in the case the thermostat fails or is losing efficiency in the opening according to the designed stroke or flowing area, this setting off is quickly and cleanly made without having to detach any member of the cooling circuit. We need not to wait the circuit is cooled to work within, or to put back cooling fluid or a sealing gasket, very often being lost when the damaged thermostat is eventually detached for replacement.

Other advantages in the use of the deblocking arrangement of a damaged thermostat to be disclosed later lie in the removal of the worn out danger the cylinder head seal and other components of the engine might bear if the vehicle is still being driven with a defective thermostat arrangement, instead a service shop can be reached where the thermostat can be replaced. In this way, sensibly loss of time and useless waste of fuel is avoided.

The prevailing idea in the design of the deblocking arrangement being the object of this patent is to set off again the flow of the cooling fluid i.e. of the water pertaining to the radiator circuit, when the water passage through the thermostat is cut off due to a malfunction of the thermostat.

The above setting off can be obtained in several ways: a) by causing a forced operation of the thermostat using the action of outside means against the thermostat sealing motion; b) by shifting the thermostat body ( if possible ), a clearance between said body and its operating seat being defined, and c) by arranging a paralelled ducting (by-pass) with that of the water flow through the thermostat, in a way that when the flow is sealed, the ancillary ducting is allowing the cooling fluid to be run down.

In the first case, the forced operation of the thermostat can be made by an arrangement which comprises a threaded stud associated to the thermostat motion and provided with a blocking nut. In the second case, the shifting of the thermostat body can be achieved by an arrangement similarly to the previous one or by a head pivoted cam and stud combined motion. In the third case, the ancillary ducting or by-pass has a normally closed valve motion operable by another pivoted cam and stud combined motion.

To make the disclosure clearer, the present specification 'is to be referred to the attached drawings wherein, by way of an illustrative and non-exhaustive example, a case of preferred embodiment of a deblocking arrangement of a damaged thermostat is shown according to the basic principles of the claims.

In the drawings:

Figure 1 shows a thermostat arrangement inserted in the cooling water ducting of a car engine and provided with operating means in case the automatic operation internal motion fails.

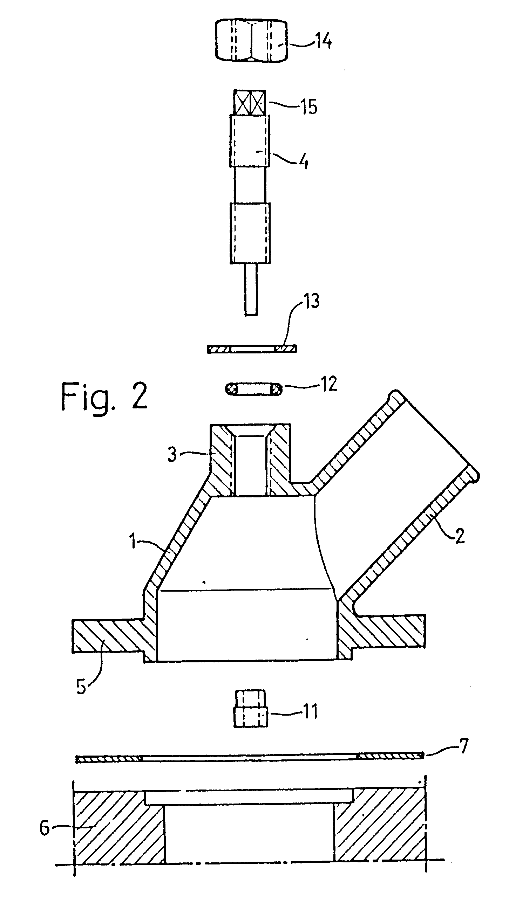

Figura 2 makes up the breakdown of the components integrated in the arrangement shown in the previous drawing.

Figure 3 shows the thermostat arrangement in a shifting set-up and also provided with means for an outside action as related to said shifting, these means comprising a threaded stud, and figure 4 shows the arrangement with means operated by an outside controlled cam.

The body -1- of the arrangement shows a similar configuration as that of a valve body,provided with an opening -2- for the discharge of water, a cylindrical support -3- for the operating stud -4- and a base -5- designed for the engagement of the arrangement with a lower box -6- between with the insertion of a seal -7-, being -8- the water intake opening in connection with the 'cooling circuit.

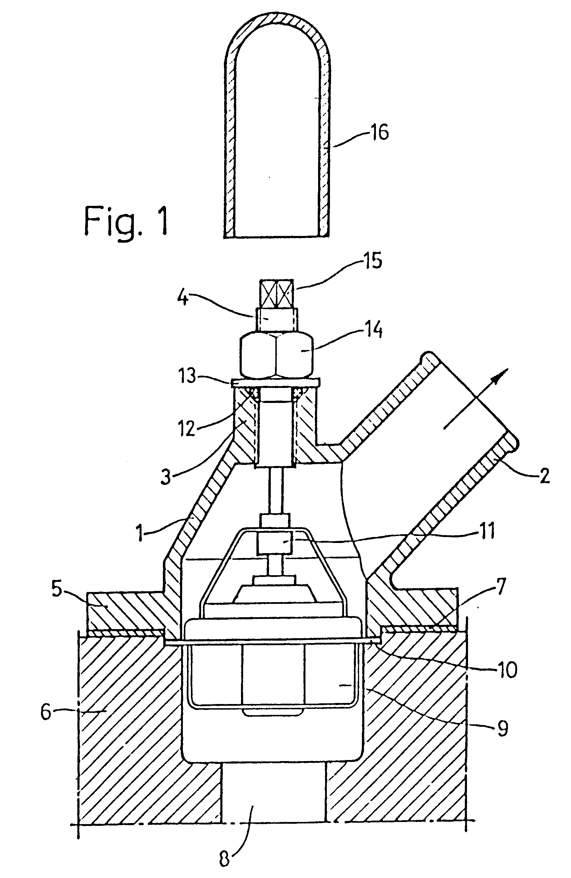

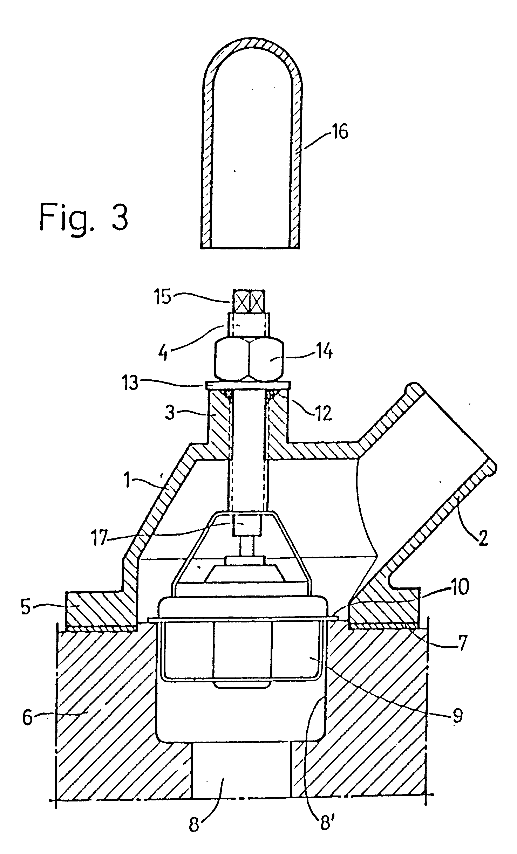

The body -9- of the thermostat has a crown-shaped peripheral projection -10- which, in the case of figure 1, is designed for the positioning of said body between the lower box -6- and the disclosed body of the arrangement. In the case of figure 3,the projection -10- enables the seating of the thermostat by leaning of the body -9-against the edges of the hole -8'- made in the lower box-6-.

The stud -4- guided by the support -3- is engaged by the link -11- with the thermostat operating stud and a pressure might thus be applied on the thermostat to define the component opening if a failure is caused. O-ring -12- enables the sealing of the engagement of the stud -4-, this action helped by the washer -13- and the nut -14-, the latter being designed to tie down the stud after being operated by its head -15- in an advantageously polygonal way for instance squared.

The rubber cap -16- ought to avoid any dust settlement in the components of the arrangement while the arrangement sealing is secured.

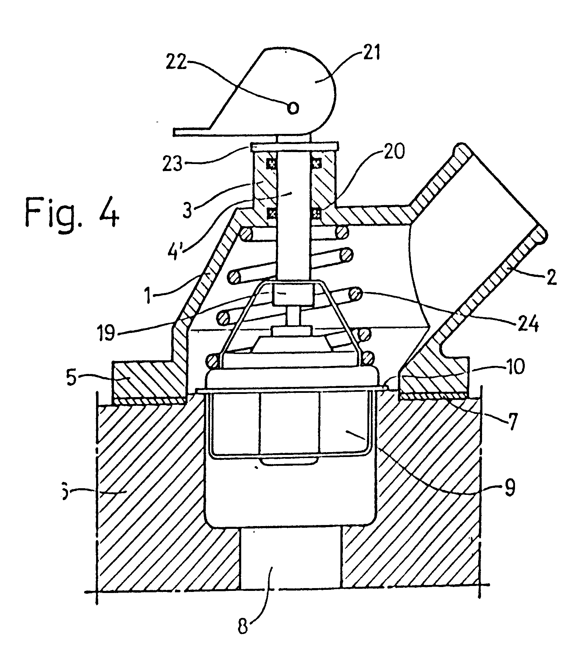

In the version of figure 3, the stud -4- is shaping the terminal -17 - by way of its engagement to the thermostat stud and originating the thermostat driving. In the version of figure 4, the stud -4'- is engaged by its end -19- to the thermostat stud, O-rings -20- enable a sealing adjustment in the support -3-, cam -21- is engaged by the pin -22- on the stud head by timely resting against the washer -23-, while the spring -24- applies the thermostat body -9-against its seat.

Profile of cams -21- and -21'- is to be associated to a curve suitable to their function, like an Archimedian spiral, a logarithmic spiral, a three centers spiral or another one.

In addition to the disclosed version and designed to be fitted on the engine's cylinder head, the arrangement can be constructed with two inlets suitably for an overhead setup.

The deblocking arrangement of a damaged thermostat as disclosed, within its essentiality, can be manufactured in any shape and size whatever, with the means and materials most suitable and with the most convenient accessories as all that is included in the scope of the following claims.

## Claims

1. A deblocking arrangement for a damaged thermostat, designed to be inserted in a cooling circuit of a thermal engine for a vehicle, comprising a stud(4) guided in a cylindrical support (3) and cooperating with a thermostat body (9), which is moved through an opening (2) that communicates with a cooling circuit and selects a water flow towards the cooling circuit itself, characterized in that the stud (4, 4') has an end directly connected to the thermostat body (9) and is movable from a position in which the thermostat body (9) closes said opening (2) to a position in which the thermostat body opens said opening (2), whereby when the thermostat body (9) exhibits a defective operation which causes a cut off of said flow, this flow is set off again by the stud (4, 4') direct action on the thermostat body (9).

2. A deblocking arrangement of a damaged thermostat, according to claim 1, wherein the stud (4) is engaged with the head of the thermostat body (9) by a link (11) and is screwed through the cylindrical support (3), a nut (14) being threaded on the stud (4) to lock the stud with respect to the cylindrical support (3), an O-ring (12) being provided to act between the support (3) and a washer (13) interposes between the nut (14) and the support (3).

3. A deblocking arrangement of a damaged thermostat, according to claim 1, wherein the stud (4) forms a terminal (17) engaged to the shaft of the thermostat body (9) and is screwed through the cylindrical support (3) to shift the thermostat body (9) with respect to its seat and to define an annular space therebetween, a nut (14) being threaded on the stud (4) to lock the stud with respect to the cylindrical support (3), an O-ring (12) acting between the support (3) and a washer (13) interposed between the nut (14) and the support (3).

4. A deblocking arrangement of a damaged thermostat, according to claim 1, wherein the stud (4') forms an end (19) engaged to the thermostat (9) and this is slidably engaged through the cylindrical support (3) driven by a cam (21) pivotedly engaged to the stud itself, said cam acting, against the action of a spring (24), on a washer (23) interposed between the cam (21) and the cylindrical support (3) to shift the thermostat body (9) and to retain the stud (4') in a new position, two O-rings (20) being provided in the cylindrical support (3) to seal the engagement of the stud (4') with the support itself.

**Revendications**

1. Dispositif de déblocage d'un thermostat défectueux, destiné à être mis dans un circuit réfrigérant d'un moteur thermique d'un véhicule, comprenant un goujon (4) guidé dans un support cylindrique (3) et coopérant avec un corps de thermostat (9), lequel est mû à travers une ouverture (2) qui est en communication avec un circuit réfrigérant et selectionne un écoulement d'eau vers le circuit réfrigérant lui-même, caractérisé en ce que le goujon (4, 4') a une extrémité reliée directement au corps du thermostat (9) et est mobile d'une position dans laquelle le corps du thermostat (9) bouche ladite ouverture (2) à une position dans laquelle le corps du thermostat ouvre ladite ouverture (2), de manière que quand le corps du thermostat (9) a un fonctionnement défectueux causant une interruption dudit écoulement, cet écoulement est rétabli de nouveau par l'action directe du goujon (4, 4') sur le corps du thermostat (9).

2. Dispositif de déblocage d'un thermostat défectueux selon la revendication 1, caractérisé en ce que le goujon (4) est engagé avec la tête du corps de thermostat (9) par une liaison (11) et est vissé à travers le support cylindrique (3), un écrou (14) étant enfilé sur le goujon (4) en vue de bloquer le goujon par rapport au support cylindrique (3), un joint torique (12) étant prévu pour agir entre le support (3) et une rondelle (13) intercalée entre l'écrou (14) et le support (3).

3. Dispositif de déblocage d'un thermostat défectueux selon la revendication 1, caractérisé en ce que le goujon (4) forme une terminaison (17) engagée à l'arbre du corps du thermostat (9) et est vissé à travers le support cylindrique (3) en vue de déplacer le corps du thermostat (9) par rapport à son logement et de définir entre ceux-ci un espace annulaire, un écrou (14) étant enfilé sur le goujon (4) afin de bloquer le goujon par rapport au support cylindrique (3), un joint torique (12) agissant entre le support (3) et une rondelle (13) intercalée entre l'écrou (14) et le support (3).

4. Dispositif de déblocage d'un thermostat défectueux selon la revendication 1, caractérisé en ce que le goujon (4') forme une extrémité (19) engagée au thermostat (9) et celui-ci est engagé à coulissement à travers le support cylindrique (3) commandé par une came (21) engagée à rotation au goujon lui-même, ladite came agissant, contre l'action d'un ressort (24), sur une rondelle (23) intercalée entre la came (21) et le support cylindrique (3) en vue de déplacer le corps du thermostat (9) et de maintenir le goujon (4) à la nouvelle position, deux joints toriques (20) étant prévus dans le support cylindrique (3) dans le but de réaliser l'engagement étanche du goujon (4') avec le support lui-même.

**Patentansprüche**

1. Vorrichtung zum Losmachen eines beschädigten Thermostaten, die zum Einsetzen in einen Kühlkreislauf einer Wärmekraftmaschine für ein Fahrzeug bestimmt ist und einen Bolzen (4) umfaßt, der innerhalb eines zylinderförmigen Lagers (3) geführt ist und zusammen mit einem Thermostakenkörper (9) mitwirkt, der über eine mit dem Kühlkreislauf verbunde und den Wasserdurchfluß zu dem Kühlkreislauf selbst auswählende Öffnung (2) verschoben wird, dadurch gekennzeichnet, daß der Bolzen (4, 4') ein unmittelbar mit dem Thermostatenkörper (9) verbundenes Ende hat und von einer Stellung - in welcher der Thermostatenkörper (9) die erwähnte Öffnung (2) schließt - zu einer Stellung verschiebbar ist, in welcher der Thermostatenkörper die erwähnte Öffnung (2) aufmacht, wobei, wenn der Thermostatenkörper (9) einen mangelhaften die Unterbrechung des o.e. Durchflusses bewirkenden Betrieb aufweist, dieser Durchfluß durch das unmittelbare Wirken des erwähnten Bolzens (4, 4') auf den Thermostatenkörper (9) wieder in Bewegung gesetzt wird.

2. Vorrichtung zum Losmachen eines beschädigten Thermostaten nach Anspruch 1, wobei der Bolzen (4) mit dem Kopf des Thermostatenkörpers (9) über ein Zwischenglied (11) verbunden ist und durch den zylinderförmigen Lager (3) hindurch eingeschraubt wird, wobei eine Schraubenmutter (14) am Bolzen (4) zum Spannen des Bolzens gegenüber dem zylinderförmigen Lager (3) angebracht ist und wobei eine "O-ring" Dichtung (12) zum Wirken zwischen dem Lager (3) und einer zwischen der Schraubenmutter (14) und dem Lager (3) liegenden Unterlegsscheibe (13) vorgesehen ist.

3. Vorrichtung zum Losmachen eines beschädigten Thermostaten nach Anspruch 1, wobei der Bolzen (4) ein mit der Welle des Thermostatenkörpers (9) verbundenes Endstück (17) bildet und durch den zylinderförmigen Lager (3) hindurch zum Verschieben des Thermostatenkörpers (9) gegenüber dessen Sitz und zum Bilden eines Ringraumes dazwischen eingeschraubt wird, wobei eine Schraubenmutter (14) am Bolzen (4) zum Spannen des Bolzens gegenüber dem zylinderförmigen Lager (3) angebracht ist und eine "O-ring" Dichtung zwischen dem Lager (3) und einer zwischen der Schraubenmutter (14) und dem Lager (3) liegenden Unterlegsscheibe (13) wirkt.

4. Vorrichtung zum Losmachen eines beschädigten Thermostaten nach Anspruch 1, wobei der Bolzen (4') ein Ende (19) bildet, das mit dem Thermostaten (9) verbunden ist, während dieser durch den zylinderförmigen Lager (3) verschiebbar gelagert ist, der von einer mit dem Bolzen selbst drehbar verbundenen Kurve (21) gesteuert ist, wobei diese Kurve gegen die Wirkung einer Feder (24) auf eine zwischen der Kurve (21) und dem zylinderförmigen Lager (3) liegenden Unterlegsscheibe (23) zum Verschieben des Thermostatenkörpers (9) und zum Halten des Bolzens (4') in einer neuen Stellung wirkt, wobei zwei "O-ring" Dichtungen (20) innerhalb des zylinderförmigen Lagers (3) zur Verwirklichung einer dichten Lagerung des Bolzens (4') innerhalb des Lagers selbst vorgesehen sind.

Fig. 1

14

15

4

13

Fig. 2

12

3

1

2

5

11

7

6

Fig. 3

Fig. 4